# EUROPEAN PATENT APPLICATION

(11) **EP 2 056 503 A1**
(43) Date of publication of application: **06.05.2009**
(21) Application number: 08776877.6
(22) Date of filing: 24.07.2008
(51) Int. Cl.: H04J 11/00, H04B 1/04

(54) **MULTICARRIER SIGNAL TRANSMISSION DEVICE, MULTICARRIER SIGNAL RECEPTION DEVICE, MULTICARRIER SIGNAL TRANSMISSION METHOD, AND MULTICARRIER SIGNAL RECEPTION METHOD**

(30) Priority: 27.07.2007 JP 2007195382
(71) Applicant: Panasonic Corporation, Kadoma-shi Osaka 571-8501 (JP)
(72) Inventor: UEDA, Yoshiaki, c/o Panasonic Corporation, IPROC, Osaka 540-6207 (JP); TAKAHASHI, Hideki, c/o Panasonic Corporation, IPROC, Osaka 540-6207 (JP)
(74) Representative: Grünecker, Kinkeldey, Stockmair & Schwanhäusser Anwaltssozietät
(86) International application number: PCT/JP2008/001980
(87) International publication number: WO 2009/016810

(57) **Abstract**

A multi-carrier signal transmitter includes a multi-carrier modulation circuit, a power converter, a frequency converter and an interference protection determination circuit, and that the interference protection determination circuit determines a difference in power levels between a higher layer component and a lower layer component of multi-carrier signals in a manner to avoid digital interference. The power converter converts a power level of the multi-carrier signals when necessary based on a data of the determination, and the frequency converter converts a center frequency band of the multi-carrier signals when necessary based on the data of the determination. The digital interference of the hierarchical multi-carrier signals can be prevented.

## Description

### TECHNICAL FIELD

The present invention relates to a multi-carrier signal transmitter, a multi-carrier signal receiver, a method of transmitting multi-carrier signal as well as a method of receiving multi-carrier signal that are capable of transmitting and/or receiving hierarchical multi-carrier signals without causing digital interference.

### BACKGROUND ART

A conventional multi-carrier signal transmitter capable of transmitting hierarchical signals allocates a power level and a modulation method to each individual carrier in order to improve reliability of the hierarchical transmission. A multi-carrier signal transmitter of this kind is disclosed in patent document 1 for example. This method of allocating power levels is to allocate the power levels in a sequentially order during the multi-carrier modulation to equalize power spectral densities of the hierarchical multi-carrier signals, thereby preventing interference with other services. Likewise, this method of allocating modulation methods is to sequentially allocate predetermined modulation methods such as DQPSK, QPSK, 16QAM and 64QAM during the multi-carrier modulation so as to prevent interference from occurring in certain frequency bands due to multipath.

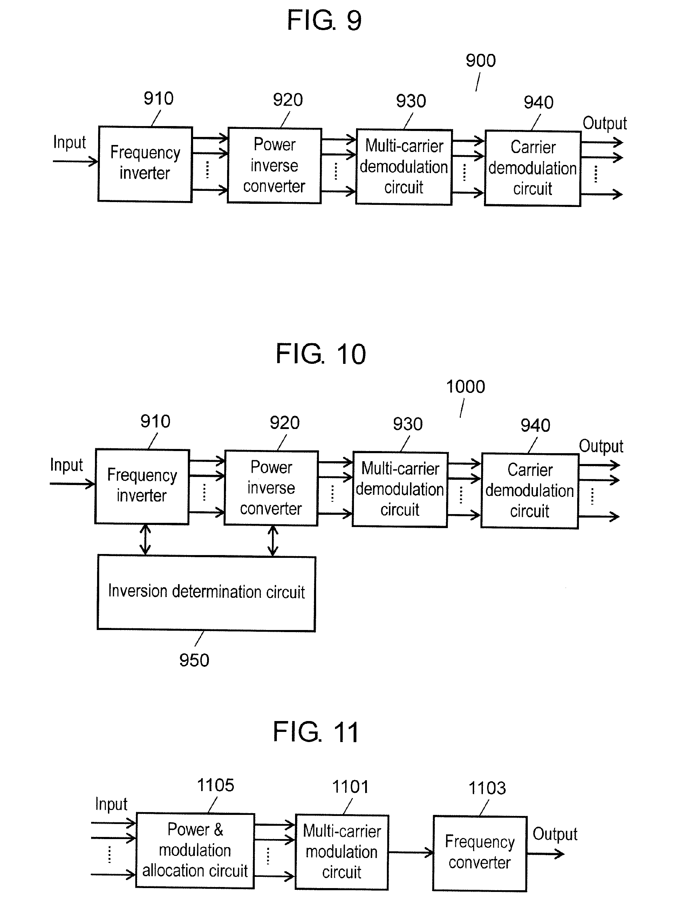

Fig. 11 illustrates one such conventional hierarchical modulation system and a transmitter-receiver thereof.

In Fig. 11, power & modulation allocation circuit 1105 allocates a power level and a modulation method to each individual carrier. Multi-carrier modulation circuit 1101 performs multi-carrier modulation of the individual carrier to generate a multi-carrier signal. Frequency converter 1103 converts the multi-carrier signal output from multi-carrier modulation circuit 1101 into a center frequency band of the physical transmission channel.

In the conventional structure discussed above, although power & modulation allocation circuit 1105 allocates power levels and modulation methods in the sequentially order, it is not designed, however, to allocate the power levels in a manner to avoid the hierarchical multi-carrier signal from being interfered digitally. It therefore has a problem that a higher layer component and a lower layer component of the multi-carrier signal digitally interfere with each other.

Patent Reference 1: Unexamined Japanese Patent Publication, No. 1995-321765

### SUMMARY OF THE INVENTION

The present invention provides a multi-carrier signal transmitter, a multi-carrier signal receiver, a method of transmitting multi-carrier signal as well as a method of receiving multi-carrier signal that are capable of transferring a hierarchical multi-carrier signal without causing digital interference between a higher layer component and a lower layer component of the multi-carrier signal.

The multi-carrier signal transmitter includes any of a power converter for receiving a higher layer component and a lower layer component of multi-carrier signal and outputting at least one of them after converting a power level of one of the higher layer component and the lower layer component of the multi-carrier signal and a frequency converter for receiving the higher layer component and the lower layer component of the multi-carrier signal and outputting at least one of them after converting a center frequency of one of the higher layer component and the lower layer component of the multi-carrier signal, and an interference protection determination circuit for detecting any of a difference in power levels between the higher layer component and the lower layer component of the multi-carrier signal output from the power converter and a difference in power levels between the higher layer component and the lower layer component of the multi-carrier signal output from the frequency converter. The interference protection determination circuit inputs a data of a predetermined threshold to at least one of the power converter and the frequency converter when the difference in power levels is smaller than the predetermined threshold. The power converter controls a power level of one of the higher layer component and the lower layer component of the multi-carrier signal it outputs in a manner to make the difference in power levels between them becomes equal to or larger than the predetermined threshold. The frequency converter either increases or decreases a center frequency of one of the higher layer component and the lower layer component of the multi-carrier signal it outputs.

The multi-carrier signal receiver includes a frequency inverter for outputting a multi-carrier signal after inversely converting a frequency of a received signal when necessary, a power inverse converter for inversely converting a power of the multi-carrier signal when necessary, a multi-carrier modulation circuit for reproducing a carrier from the multi-carrier signal output by the power inverse converter, and a carrier modulation circuit for demodulating the carrier.

The method of transmitting multi-carrier signal includes any of a step of outputting a higher layer component and a lower layer component of multi-carrier signal after converting a power level of one of the higher layer component and the lower layer component of the signal and a step of outputting the higher layer component and the lower layer component of the multi-carrier signal after converting a center frequency of one of the higher layer component and the lower layer component of the signal, a step of detecting any of a difference in power levels between the power-converted higher layer component and the lower layer component of the multi-carrier signal and a difference in power levels between the frequency-converted higher layer component and the lower layer component of the multi-carrier signal, and a step of controlling at least one of the power level and the frequency of any of the higher layer component or the lower layer component of the multi-carrier signal in a manner to make the difference in power levels between them becomes equal to or larger than a predetermined threshold when the detected difference is smaller than the predetermined threshold.

The method of receiving multi-carrier signal includes a step of outputting a multi-carrier signal after inversely converting a frequency of a received signal when necessary, a step of inversely converting a power of the multi-carrier signal when necessary, a step of reproducing a carrier from the multi-carrier signal output after the power inversion, and a step of demodulating the carrier.

### BRIEF DESCRIPTION OF DRAWINGS

Fig. 1 is a block diagram showing one example of multi-carrier signal transmitter according to a first exemplary embodiment of the present invention.
Fig. 2A is a schematic diagram showing an example of operating a power converter shown in Fig. 1, a variable amplitude amplifier and a variable amplitude attenuator shown in Fig. 7.
Fig. 2B is a schematic diagram showing another example of operating the power converter shown in Fig. 1, the variable amplitude amplifier and the variable amplitude attenuator shown in Fig. 7.
Fig. 3A is a schematic diagram showing an example of operating a frequency converter shown in Fig. 1 and a frequency processor shown in Fig. 7.
Fig. 3B is a schematic diagram showing another example of operating the frequency converter shown in Fig. 1 and the frequency processor shown in Fig. 7.
Fig. 4 is a schematic diagram showing an example of operating an interference protection determination circuit 104 shown in Fig. 1 and Fig. 7.
Fig. 5 is a schematic diagram showing presence and absence of digital interference in relation with conversion of a power level.
Fig. 6 is a schematic diagram showing presence and absence of digital interference in relation with conversion of a center frequency.
Fig. 7 is a block diagram showing one example of multi-carrier signal transmitter according to a second exemplary embodiment of the present invention.
Fig. 8 is a block diagram showing an internal structure of the frequency processor shown in Fig. 7.
Fig. 9 is a block diagram showing one example of multi-carrier signal receiver according to a third exemplary embodiment of the present invention.
Fig. 10 is a block diagram showing one example of multi-carrier signal receiver according to a fourth exemplary embodiment of the present invention.
Fig. 11 is a block diagram showing an example of conventional multi-carrier signal transmitter.

### REFERENCE MARKS IN THE DRAWINGS

100 Carrier modulation circuit
101 Multi-carrier modulation circuit
102 Power converter
103 Frequency converter
104 Interference protection determination circuit
110 Multi-carrier signal transmitter
200, 300, 400 and 500 Higher layer component of multi-carrier signal
201, 301, 401 and 502 Lower layer component of multi-carrier signal
202HP and 202LP Lower layer component of multi-carrier signal
303 and 603 Single layer component of multi-carrier signal
304LF and 304HF Lower layer component of multi-carrier signal
502LP and 502HP Lower layer component of multi-carrier signal
700 Variable amplifier
701 Variable attenuator
803 Frequency shifter
804 Variable BPF
805 Multiplexer
910 Frequency inverter
920 Power inverse converter
930 Multi-carrier demodulation circuit
940 Carrier demodulation circuit
950 Inversion determination circuit

### DETAILED DESCRIPTION OF PREFERRED EMBODIMENTS

Description is provided hereinafter of the preferred embodiments for carrying out the present invention with reference to the accompanying drawings.

### FIRST EXEMPLARY EMBODIMENT

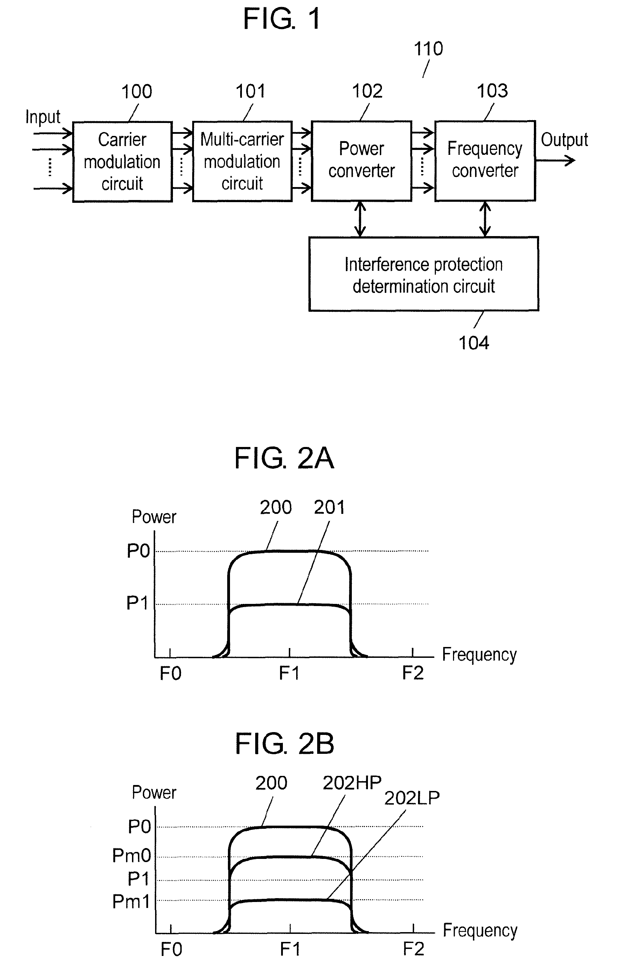

Fig. 1 is a block diagram showing one example of multi-carrier signal transmitter according to the first exemplary embodiment of this invention.

In Fig. 1, multi-carrier signal transmitter 110 includes carrier modulation circuit 100, multi-carrier modulation circuit 101, power converter 102, frequency converter 103 and interference protection determination circuit 104. Carrier modulation circuit 100 receives a plurality of input signals for carrier modulation, and outputs a plurality of carriers. Multi-carrier modulation circuit 101 receives the plurality of carriers output from carrier modulation circuit 100, and outputs a plurality of multi-carrier signals. These multi-carrier signals are comprised of a plurality of carriers multiplexed along a frequency axis, which are transmitted in parallel. Power converter 102 receives the plurality of multi-carrier signals output from multi-carrier modulation circuit 101, and outputs the plurality of multi-carrier signals after increasing or decreasing any of their power levels, or without converting the power levels. In connection with this power conversion, it is considered appropriate to multiplex and transmit a data containing detail of the power conversion. Frequency converter 103 receives the multi-carrier signals output from power converter 102, and outputs hierarchical multi-carrier signals after increasing or decreasing any of their center frequencies, or without converting the center frequencies. In connection with this frequency conversion, it is also considered appropriate to multiplex and transmit a data including detail of the frequency conversion. As an example of the hierarchical multi-carrier signal, description is provided herein of a two-layer structure consisting of a higher layer component and a lower layer component of multi-carrier signal. Interference protection determination circuit 104 receives a data showing a difference in power levels between the higher layer component and the lower layer component of the multi-carrier signal from power converter 102. Interference protection determination circuit 104 then outputs to power converter 102 a data indicating a difference in the power levels that does not give rise to digital interference between the higher layer component and the lower layer component of the multi-carrier signal. In addition, interference protection determination circuit 104 receives another data showing a difference in power levels between the higher layer component and the lower layer component of the multi-carrier signal from frequency converter 103. Interference protection determination circuit 104 then outputs to frequency converter 103 a data of frequency conversion necessary to prevent digital interference between the higher layer component and the lower layer component of the multi-carrier signal.

The individual components of multi-carrier signal transmitter 110 operate in a manner, which is described further by using some examples shown in Figs. 2A, 2B, 3A, 3B, 4, 5 and 6.

In Figs. 2A, 2B, 3A, 3B, 4, 5 and 6, the axes of abscissa and ordinate represent frequency and power respectively. In these figures, frequency F1 shows a center frequency of a physical channel for transmitting the multi-carrier signal. Frequency F0 indicates a center frequency of another physical channel contiguous with the lower frequency side of frequency F1. Frequency F2 indicates a center frequency of another physical channel contiguous with the higher frequency side of frequency F1. Power P0 indicates a power level of higher layer component 200 and signal layer component 303 of the multi-carrier signal as their powers are not converted by power converter 102. Power P1 indicates a power level of lower layer component 201 of the multi-carrier signal as its power is not converted by power converter 102. Power Pm0 indicates a power level of lower layer component 202HP of the multi-carrier signal, and Power Pm1 indicates a power level of lower layer component 202LP of the multi-carrier signal.

Carrier modulation circuit 100 modulates the plurality of input signals using any of pre-specified types of modulation methods, and outputs the plurality of modulated carriers. The pre-specified types of modulation methods include DQPSK, QPSK, 16QAM and 64QAM, for example.

Multi-carrier modulation circuit 101 performs an inverse Fourier transform of the plurality of carriers, and outputs a plurality of multi-carrier signals.

Power converter 102 outputs the plurality of multi-carrier signals received from multi-carrier modulation circuit 101 after converting or without converting their power levels. Power converter 102 either increases or decreases the power levels of the plurality of multi-carrier signals output from multi-carrier modulation circuit 101 when it converts the power levels to produce the plurality of power-converted multi-carrier signals. At the same time when power converter 102 increases or decreases the power levels of the hierarchical multi-carrier signals, it forwards to interference protection determination circuit 104 a data indicating a difference in the power levels between a higher layer component and a lower layer component of the multi-carrier signals after the conversion of their power levels In addition, power converter 102 receives from interference protection determination circuit 104 a data representing a difference in the power levels that does not give rise to digital interference. Subsequently, power converter 102 either increases or decreases the power level of any of the higher layer component and the lower layer component of the multi-carrier signals to adjust them within the difference of the power levels that does not give rise to digital interference.

Figs. 2A and 2B show examples of operating power converter 102. As shown in Figs. 2A and 2B, higher layer component 200 and lower layer component 201 of the multi-carrier signals are in a hierarchical structure for transmission. Power converter 102 has the function of converting power level P1 of lower layer component 201 of the multi-carrier signals to higher power level Pm0 or lower power level Pm1. Lower layer component 201 of the multi-carrier signals is converted to level 202HP when power converter 102 increases the power level or to level 202LP when power converter 102 decreases the power level.

Frequency converter 103 outputs the plurality of multi-carrier signals received from power converter 102 with or without converting their center frequencies. Frequency converter 103 either increases or decreases the center frequencies of the plurality of multi-carrier signals it receives when converting the center frequencies, and outputs the plurality of frequency-converted multi-carrier signals. When the multi-carrier signals become the hierarchical structure as a result of the increase or decrease of the center frequencies by frequency converter 103, it transmits to interference protection determination circuit 104 a data indicating a difference in power levels between the higher layer component and the lower layer component of the multi-carrier signals. Frequency converter 103 then receives from interference protection determination circuit 104 the data representing the difference in the power levels that does not give rise to digital interference. Subsequently, frequency converter 103 either increases or decreases the center frequency of any of the higher layer component and the lower layer component of the multi-carrier signals to adjust them within the difference of the power levels that does not give rise to digital interference.

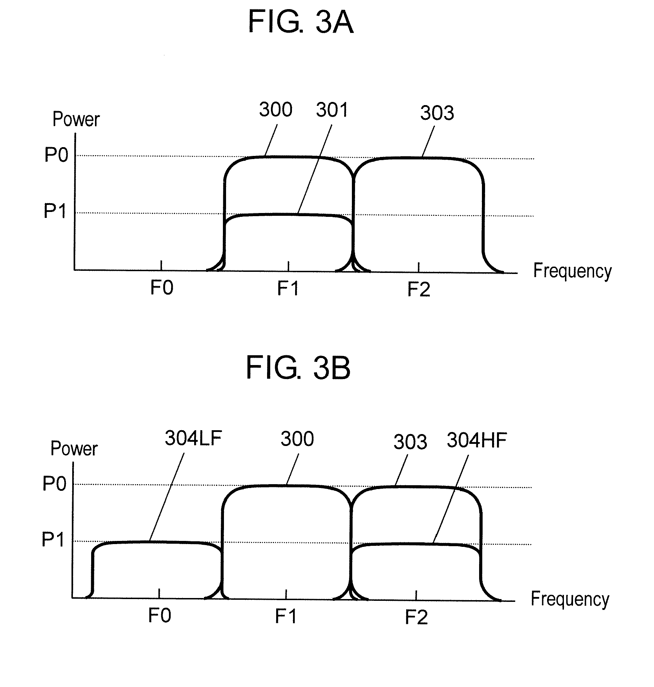

Figs. 3A and 3B show examples of operating frequency converter 103. Fig. 3A indicates a case in which higher layer component 300 and lower layer component 301 of the multi-carrier signals from power converter 102 are hierarchical for transmission. In this instance, frequency converter 103 can convert center frequency F1 of lower layer component 301 of the multi-carrier signals in a manner to increase to higher frequency F2 or decrease to lower frequency band F0.

Interference protection determination circuit 104 receives a data representing a difference in the power levels between the higher layer component and the lower layer component of the multi-carrier signals output from power converter 102. By using this received data, interference protection determination circuit 104 performs a determination of digital interference, details of which will be described later. When interference protection determination circuit 104 determines at this time that digital interference is likely to occur, it forwards to power converter 102 a data indicating a difference in the power levels that does not give rise to digital interference. On the other hand, interference protection determination circuit 104 does not forward to power converter 102 the data of the difference in the power levels that does not give rise to digital interference when it determines that the digital interference is not likely.

It is also possible to have frequency converter 103 detect the difference in power levels between the higher layer component and the lower layer component of the multi-carrier signals. If this is the case, interference protection determination circuit 104 receives a data representing the difference in the power levels between the higher layer component and the lower layer component of the multi-carrier signals output from frequency converter 103. Interference protection determination circuit 104 performs the determination of digital interference by using this received data, as will be described later. When interference protection determination circuit 104 determines that digital interference is likely to occur, it forwards to frequency converter 103 a data indicating the difference in the power levels that does not give rise to digital interference. Or, interference protection determination circuit 104 does not forward to frequency converter 103 the data of the difference in the power levels that does not give rise to digital interference when it determines that the digital interference is not likely.

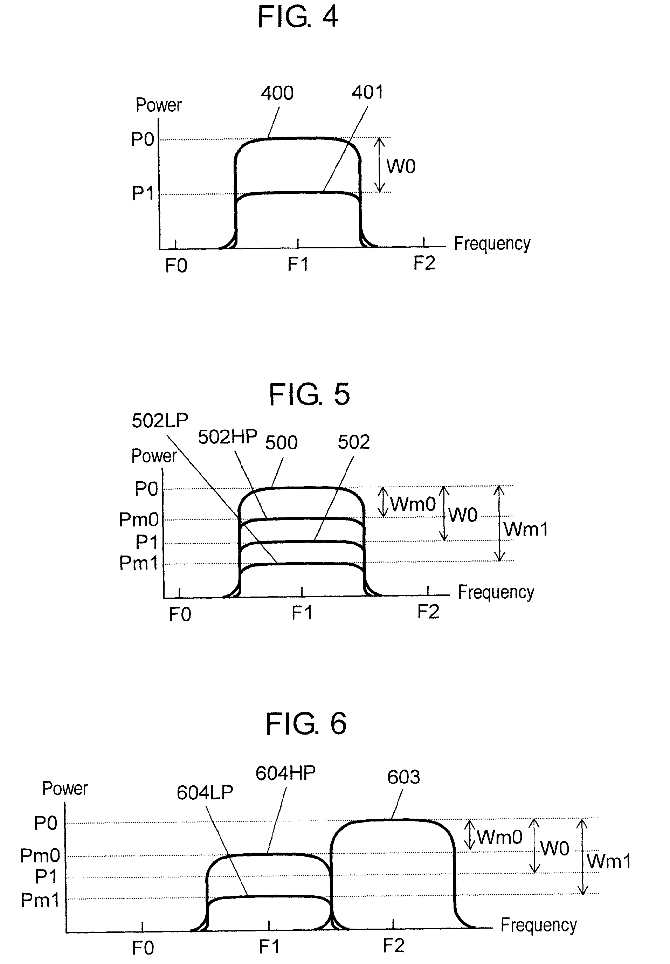

Referring to Fig. 4, description is provided for a criterion used for interference protection determination circuit 104 to carry out the above determination. Difference in power levels W0 shown in Fig. 4 is the difference of the power levels, with which interference protection determination circuit 104 determines that digital interference does not occur between higher layer component 400 and lower layer component 401 of the multi-carrier signals. The difference in power levels W0 detected by interference protection determination circuit 104 is a predetermined threshold used as the criterion for the determination that the digital interference does not occur. In other words, any magnitude larger than the difference in power levels W0 is regarded as the difference in power levels that does not cause digital interference between higher layer component 400 and lower layer component 401 of the multi-carrier signals. On the other hand, any magnitude smaller than the difference in power levels W0 is regarded as the difference in power levels that causes digital interference between higher layer component 400 and lower layer component 401 of the multi-carrier signals.

Fig. 5 shows an example of operating interference protection determination circuit 104. It is assumed in Fig. 5 that the difference in power levels W0 is the criterion used for interference protection determination circuit 104 to determine that it does not cause digital interference. Also assume that power converter 102 converts lower layer component 502 of multi-carrier signals into lower layer component 502HP by increasing its power level P1 to power level Pm0. Interference protection determination circuit 104 then receives a data of difference in power levels Wm0 between higher layer component 500 and lower layer component 502HP of the multi-carrier signals from power converter 102, and compares this data with the difference in power levels W0. Determination is made according to a result of this comparison that the difference in power levels Wm0 between higher layer component 500 and lower layer component 502HP of the multi-carrier signals is smaller than the difference in power levels W0 in possession of interference protection determination circuit 205. Since a result of this determination indicates that the difference in power levels between higher layer component 500 and lower layer component 502HP of the multi-carrier signals is such that it can cause digital interference, interference protection determination circuit 104 forwards to power converter 102 a data of the difference in power levels W0 as the difference of not causing digital interference. As a consequence of receiving this data of the difference in power levels W0, power converter 102 modifies its process of power conversion.

Assumption is also made that power converter 102 converts lower layer component 502 of multi-carrier signals into lower layer component 502LP by decreasing its power level P1 to power level Pm1. Interference protection determination circuit 104 then receives a data of difference in power levels Wm1 between higher layer component 500 and lower layer component 502LP of the multi-carrier signals from power converter 102, and compares this data with the difference in power levels W0. Determination is made according to a result of this comparison that the difference in power levels Wm1 between higher layer component 500 and lower layer component 502LP of the multi-carrier signals is larger than the difference in power levels W0. Since a result of this determination indicates that the difference in power levels between higher layer component 500 and lower layer component 502LP of the multi-carrier signals is not to cause digital interference, interference protection determination circuit 104 does not forward to power converter 102 any data of the difference in power levels W0 as the difference of not causing digital interference. As a result, power converter 102 does not change its process of power conversion.

There is a case that power converter 102 does not make conversion to change the difference in power levels between higher layer component 500 and lower layer component 502HP (or lower layer component 502LP) of the multi-carrier signals even when it receives the data of the difference in power levels W0 not causing digital interference from interference protection determination circuit 104. In this case, frequency converter 103 converts a center frequency of any of higher layer component 500 and lower layer component 502HP (or lower layer component 502LP) of the multi-carrier signals. Description is given further of this case with reference to Fig. 6.

In Fig. 6, attention is called to lower layer component 604HP having power level Pm0 of multi-carrier signals output from power converter 102. Assume that frequency converter 103 converts a frequency of lower layer component 604HP of the multi-carrier signals from center frequency F1 to center frequency F2. Interference protection determination circuit 104 then receives a data of difference in power levels Wm0 between single layer component 603 and lower layer component 604HP of the multi-carrier signals from frequency converter 103, and compares this data with the difference in power levels W0. As a result of this comparison, interference protection determination circuit 104 forwards to frequency converter 103 the data representing the difference in power levels that does not cause digital interference, since the difference in power levels Wm0 is smaller than the difference in power levels W0. Accordingly, frequency converter 103 modifies its process of the frequency conversion. On the other hand, if frequency converter 103 converts frequency of lower layer component 604HP of multi-carrier signals from center frequency F1 to center frequency F0, it does not result in a hierarchical structure since there is no higher layer component of the multi-carrier signals present at center frequency F0. Interference protection determination circuit 104 therefore does not forward to frequency converter 103 any data of the difference in power level indicating it as not being a cause of digital interference. Accordingly, frequency converter 103 does not change its process of frequency conversion.

Attention is called next to lower layer component 604LP having power level Pm1 of the multi-carrier signals output from power converter 102. Assume that frequency converter 103 converts a frequency of lower layer component 604LP of the multi-carrier signal from center frequency F1 to center frequency F2. Interference protection determination circuit 104 then receives a data of difference in power levels Wm1 between single layer component 603 and lower layer component 604LP of the multi-carrier signals from frequency converter 103, and compares this data with the difference in power levels W0. As a result of this comparison, it is determined that the difference in power levels Wm1 between single layer component 603 and lower layer component 604LP of the multi-carrier signals is larger than the difference in power levels W0. Since the difference in power levels Wm1 being larger than the difference in power levels W0 means that it does not to cause digital interference, interference protection determination circuit 104 does not forward to frequency converter 103 any data of the difference in power level indicating it as not being a cause of digital interference. As a result, frequency converter 103 does not change its process of frequency conversion. Similarly, when frequency converter 103 converts the frequency of lower layer component 604LP of multi-carrier signals from center frequency F1 to center frequency F0, it does not result in a hierarchical structure since there is no higher layer component of the multi-carrier signals present at center frequency F0. Interference protection determination circuit 104 therefore does not forward to frequency converter 103 any data of the difference in power level indicating it as not being a cause of digital interference. Accordingly, frequency converter 103 does not change its process of frequency conversion.

As discussed above, interference protection determination circuit 104 determines a difference in power levels between the higher layer component and the lower layer component of the multi-carrier signals in a manner to prevent digital interference when power converter 102 increases or decreases a power level of any of the higher layer component and the lower layer component of the multi-carrier signals. This can thus achieve transmission of the hierarchical multi-carrier signals without digital interference. Interference protection determination circuit 104 also determines a difference in power levels between the higher layer component and the lower layer component of the multi-carrier signals in a manner to prevent digital interference when frequency converter 103 increases or decreases the center frequency of any of the higher layer component and the lower layer component of the multi-carrier signals. This can hence achieve transmission of the hierarchical multi-carrier signals without digital interference. As a result, the invention can realize highly reliable transmission in the scheme of hierarchical transmission of multi-carrier signal.

According to a result of experiment, it was found that the transmitter can prevent digital interference between higher-layer OFDM signals and lower-layer OFDM signals with a difference of 21.81dBm in power levels when transmission was carried out in a hierarchical mode by using the two OFDM signals consisting of the higher-layer OFDM signals of -16.40dBm in power level and the lower-layer OFDM signals of -38.21dBm in power level at a center frequency of 479.142857MHz.

What has been described above is an example, in which power converter 102 is placed after multi-carrier modulation circuit 101, and frequency converter 103 is placed after power converter 102. However, frequency converter 103 may be placed after multi-carrier modulation circuit 101, and power converter 102 may be placed after frequency converter 103.

### SECOND EXEMPLARY EMBODIMENT

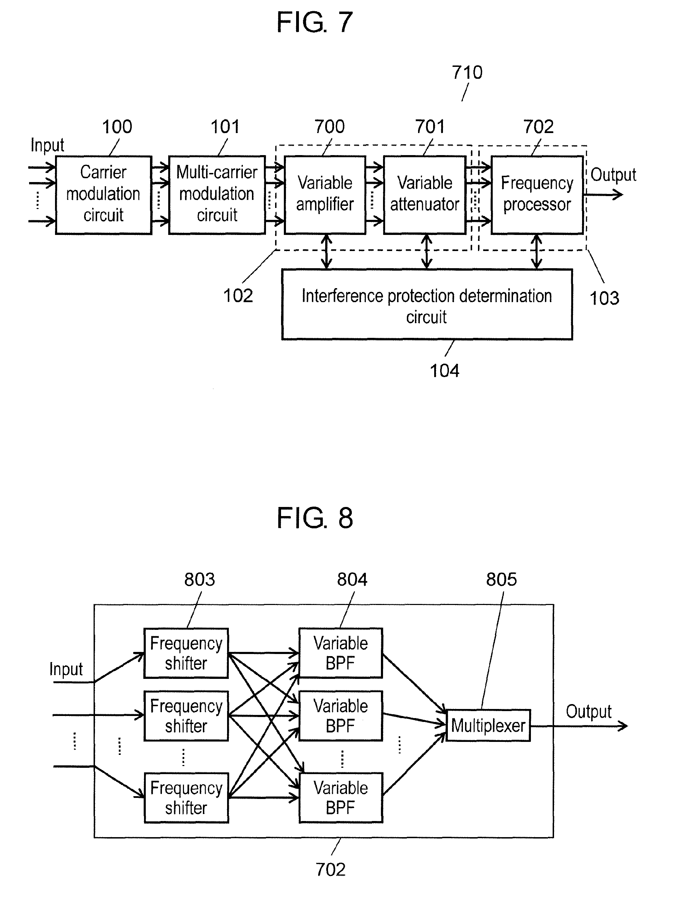

Fig. 7 is a block diagram of multi-carrier signal transmitter 710 representing one example according to the second exemplary embodiment of this invention. Like reference marks are used in Fig. 7 to designate like structural components as those of Fig. 1, and their details will be skipped.

In Fig. 7, variable amplifier 700 receives a plurality of multi-carrier signals output from multi-carrier modulation circuit 101, and outputs the plurality of multi-carrier signals after increasing a level of their amplitude. When the level of amplitude is increased, their power level also increases. Variable attenuator 701 receives the plurality of multi-carrier signals output from variable amplifier 700, and outputs the plurality of multi-carrier signals after decreasing a level of their amplitude. When the level of amplitude is decreased, their power level also decreases. Frequency processor 702 receives the plurality of multi-carrier signals output from variable attenuator 701, and outputs hierarchical multi-carrier signals by either increasing or decreasing the center frequency. Interference protection determination circuit 104 receives a data indicating a difference in power levels between a higher layer component and a lower layer component of the multi-carrier signals from each of variable amplifier 700, variable attenuator 701 and frequency processor 702. Interference protection determination circuit 104 then outputs to each of variable amplifier 700, variable attenuator 701 and frequency processor 702 a data of difference in power levels W0 representing the difference of not causing digital interference between a higher layer component and a lower layer component of the multi-carrier signals.

Variable amplifier 700 and variable attenuator 701 perform the functions similar to power converter 102 of Fig. 1 so that they correspond to power converter 102 as described above. Likewise, frequency processor 702 performs the function similar to frequency converter 103 of Fig. 1 so that it corresponds to frequency converter 103.

In multi-carrier signal transmitter 710 shown in Fig. 7, the individual components operate in a way, which is described with reference to Figs. 2A, 2B, 3A, 3B, 4, 5 and 6.

Variable amplifier 700 outputs the plurality of multi-carrier signals received from multi-carrier modulation circuit 101 after increasing a signal level or without changing the signal level. An increase in the signal level is equivalent to power conversion for boosting the power since it is a process of converting an amplitude level. When variable amplifier 700 increases the amplitude level of the hierarchical multi-carrier signals, it forwards to interference protection determination circuit 104 a data indicating a difference in the power levels between higher layer component 200 and lower layer component 202HP of the multi-carrier signals after conversion of the amplitude. When variable amplifier 700 receives from interference protection determination circuit 104 a data of the difference in power levels W0 as the difference of not causing digital interference, it adjusts an amplitude level of any of higher layer component 200 and lower layer component 202HP of the multi-carrier signals in a manner to make them conform to the difference in power levels W0 so as to prevent digital interference.

Variable amplifier 700 operates in a manner, which is described with reference to the examples shown in Figs. 2A and 2B. When higher layer component 200 and lower layer component 201 of the multi-carrier signals are transmitted in a hierarchical mode, variable amplifier 700 can increase an amplitude level of lower layer component 201 of the multi-carrier signals from power level P1 to power level Pm0 as shown in Figs. 2A and 2B. There is also a case that variable amplifier 700 does not change the amplitude level of lower layer component 201 of the multi-carrier signals.

Variable attenuator 701 outputs the plurality of multi-carrier signals received from variable amplifier 700 after decreasing the amplitude level or without changing the amplitude level. This conversion of decreasing the amplitude level is equivalent to power conversion for reducing the power. When variable attenuator 701 decreases the amplitude level of the hierarchical multi-carrier signals, it forwards to interference protection determination circuit 104 a data indicating a difference in the power levels between higher layer component 200 and lower layer component 202LP of the multi-carrier signals after conversion of the power level. Furthermore, when variable attenuator 701 receives from interference protection determination circuit 104 a data of the difference in power levels W0 as the difference of not causing digital interference, it adjusts a power level of any of higher layer component 200 and lower layer component 202LP of the multi-carrier signals in a manner to make them conform to the difference in power levels so as to prevent digital interference.

When higher layer component 200 and lower layer component 201 of the multi-carrier signals are transmitted in a hierarchical mode, variable attenuator 701 can decrease an amplitude level of lower layer component 201 of the multi-carrier signals from power level P1 to power level Pm1 as shown in Figs. 2A and 2B.

Next, Fig. 8 shows an exemplary structure of frequency processor 702. As shown in Fig. 8, frequency processor 702 includes a plurality of frequency shifters 803, a plurality of variable band-pass filters 804 (designated as Variable BPF 804 in Fig. 8, and also referred to hereinafter as variable BPF 804), and multiplexer 805. Frequency shifters 803 shift frequencies of the plurality of multi-carrier signals output from variable attenuator 701 into a plurality of center frequency bands, and distribute them to the plurality of variable BPF 804. Each of variable BPF 804 passes only a predetermined frequency band set individually. Multiplexer 805 multiplexes the signals output from the plurality of variable BPF 804.

The individual frequency shifters 803 are designed to set their shifting frequencies according to data of center frequency bands, to which the individual multi-carrier signals being input are to be shifted. A typical structure of the individual frequency shifters 803 includes a heterodyne circuit, a local oscillator, and a BPF (i.e., band-pass filter). The multi-carrier signals are input to the heterodyne circuit. Heterodyne circuit multiplies, for instance, the multi-carrier signal and a local signal generated by the local oscillator, and outputs two signals, one having a higher frequency than that of the multi-carrier signal by a frequency of the local signal, and the another having a lower frequency than that of the multi-carrier signal by the frequency of the local signal. The BPF allows only one of the two signals to pass through whereas it attenuates the other signal. The structure discussed above is one example to materialize frequency shifter 803.

Accordingly, the multi-carrier signal transmitter shown in Figs. 7 and 8, and described in this second exemplary embodiment is capable of transmitting the hierarchical multi-carrier signals in the like manner as the first exemplary embodiment.

Next, description is provided further of how variable amplifier 700, variable attenuator 701 and frequency processor 702 operate, with reference to Fig. 2A to Fig. 6. Assume that higher layer component 300 and lower layer component 301 of the multi-carrier signals are in a hierarchical structure for transmission, as shown in Figs. 3A and 3B. In this instance, frequency processor 702 can convert center frequency F1 of lower layer component 301 of the multi-carrier signals in a manner to increase to higher frequency F2 or decrease to lower frequency F0.

Interference protection determination circuit 104 receives a data representing a difference in the power levels between the higher layer component and the lower layer component of the multi-carrier signals output from variable amplifier 700. By using this received data, interference protection determination circuit 104 performs a determination of digital interference, details of which will be described later. When interference protection determination circuit 104 determines at this time that digital interference is likely to occur, it forwards to variable amplifier 700 a data indicating the difference in the power levels W0 that does not give rise to the digital interference or another data indicating a difference in amplitude levels corresponding to the difference in the power levels. On the other hand, interference protection determination circuit 104 does not forward to variable amplifier 700 the data of the difference in the power levels W0 that does not give rise to the digital interference or the data indicating the difference in amplitude levels corresponding to that difference in the power levels when it determines that the digital interference is not likely.

It is also possible to have variable attenuator 701 detect the difference in power levels between the higher layer component and the lower layer component of the multi-carrier signals. If this is the case, interference protection determination circuit 104 receives a data representing the difference in the power levels or another data representing the difference in the amplitude levels between the higher layer component and the lower layer component of the multi-carrier signals output from variable attenuator 701. Interference protection determination circuit 104 then performs the determination of digital interference by using the received data, as will be described later. When interference protection determination circuit 104 determines that digital interference is likely to occur, it forwards to variable amplifier 700 the data indicating the difference in the power levels W0 that does not give rise to the digital interference or the another data indicating the difference in amplitude levels corresponding to the difference in the power levels. Or, interference protection determination circuit 104 does not forward to variable amplifier 700 the data of the difference in the power levels W0 that does not give rise to the digital interference or the data indicating the difference in amplitude levels corresponding to that difference in the power levels when it determines that the digital interference is not likely to occur.

It is also possible to have frequency processor 702 detect the difference in power levels between the higher layer component and the lower layer component of the multi-carrier signals. When this is the case, interference protection determination circuit 104 receives the data representing the difference in the power levels or another data representing the difference in the amplitude levels between the higher layer component and the lower layer component of the multi-carrier signals output from frequency processor 702. Interference protection determination circuit 104 then performs the determination of digital interference by using the received data, as will be described later. When interference protection determination circuit 104 determines that digital interference is likely to occur, it forwards to frequency processor 702 the data indicating the difference in the power levels W0 that does not give rise to the digital interference or the another data indicating the difference in amplitude levels corresponding to the difference in the power levels. Or, interference protection determination circuit 104 does not forward to frequency processor 702 the data of the difference in the power levels W0 that does not give rise to the digital interference or the data indicating the difference in amplitude levels corresponding to that difference in the power levels W0 when it determines that the digital interference is not likely to occur.

Fig. 5 shows an example of operating interference protection determination circuit 104. It is assumed that the difference in power levels W0 is the criterion used for interference protection determination circuit 104 to determine that it does not cause digital interference, as shown in Fig. 5. Variable amplifier 700 converts an amplitude level of lower layer component 502 of multi-carrier signals from its power level P1 to power level Pm0. At the same time, interference protection determination circuit 104 receives from variable amplifier 700 the data of difference in power levels Wm0 between higher layer component 500 and lower layer component 502HP of the multi-carrier signals. Interference protection determination circuit 104 then compares this difference in power level Pm0 with the difference in power levels W0. Based on a result of this comparison, interference protection determination circuit 104 determines that the difference in power levels Wm0 between higher layer component 500 and lower layer component 502HP of the multi-carrier signals is smaller than the difference in power levels W0. Since digital interference can result when the difference in power level Pm0 is smaller than the difference in power levels W0, interference protection determination circuit 104 forwards to variable amplifier 700 the data of the difference in power levels W0 as the difference of not causing digital interference.

On the other hand, when variable attenuator 701 attenuates the amplitude level of lower layer component 502 of the multi-carrier signals from its power level P1 to a level corresponding to power level Pm1, interference protection determination circuit 104 receives the data of difference in power levels Wm1 between higher layer component 500 and lower layer component 502LP of the multi-carrier signals from variable attenuator 701, and compares this difference in power level Pm1 with the difference in power levels W0 in its possession. As a result of this comparison, interference protection determination circuit 104 determines that the difference in power levels Wm1 is larger than the difference in power levels W0. Since digital interference will not result when the difference in power level Pm0 is larger than the difference in power levels W0, interference protection determination circuit 104 does not forwards to variable attenuator 701 the data of the difference in power levels as the difference of not causing digital interference.

There is also a case that neither variable amplifier 700 nor variable attenuator 701 adjusts the difference in power levels between the higher layer component and the lower layer component of the multi-carrier signals, or the difference in amplitude levels corresponding thereto. When this is the case, frequency processor 702 converts a center frequency of any of the higher layer component and the lower layer component of the multi-carrier signals. Description is provided of this case with reference to Fig. 6.

Assumption is made that frequency processor 702 converts a frequency of lower layer component 604HP having a power level Pm0 of the multi-carrier signals from center frequency F1 to center frequency F2, as shown in Fig. 6. In this case, interference protection determination circuit 104 receives a data of the difference in power levels Wm0 between single layer component 603 and lower layer component 604HP of the multi-carrier signals from frequency processor 702, and compares this data with the difference in power levels W0. As a result of this comparison, interference protection determination circuit 104 forwards to frequency processor 702 the data representing the difference in power levels W0 that does not cause digital interference, since the difference in power levels Wm0 is smaller than the difference in power levels W0. When frequency processor 702 converts the frequency of lower layer component 604HP of multi-carrier signals from center frequency F1 to center frequency F0, on the other hand, it does not result in a hierarchical structure at center frequency F0, and interference protection determination circuit 104 therefore does not forward to frequency processor 702 any data of the difference in power level indicating it as not being a cause of digital interference.

Also assume that frequency processor 702 converts a frequency of lower layer component 604LP having a power level Pm1 of the multi-carrier signals from center frequency F1 to center frequency F2. In this case, interference protection determination circuit 104 receives a data of difference in power levels Wm1 between single layer component 603 and lower layer component 604LP of the multi-carrier signals from frequency processor 702, and compares this data with the difference in power levels W0. As a result of this comparison, it is determined that the difference in power levels Wm1 between single layer component 603 and lower layer component 604LP of the multi-carrier signals is larger than the difference in power levels W0. Therefore, interference protection determination circuit 104 does not forward to frequency processor 702 any data of the difference in power levels indicating as not being a cause of digital interference. In another case when frequency processor 702 converts the frequency of lower layer component 604LP of multi-carrier signal from center frequency F1 to center frequency F0, it does not result in a hierarchical structure, so that interference protection determination circuit 104 does not forward to frequency processor 702 any data of the difference in power levels indicating as not being a cause of digital interference.

The multi-carrier signal transmitter having the foregoing structure of the second exemplary embodiment operates in the manner as discussed above. This multi-carrier signal transmitter makes use of variable amplifier 700 to increase the amplitude level of any of the higher layer component and the lower layer component of the multi-carrier signals, and variable attenuator 701 to decrease the amplitude level of any of the higher layer component and the lower layer component of the multi-carrier signals. Interference protection determination circuit 104 then determines the difference in the power levels between the higher layer component and the lower layer component of the multi-carrier signals in a manner to prevent the digital interference. These functions can hence enable the multi-carrier signal transmitter to transmit the hierarchical multi-carrier signals without having digital interference. Accordingly, this invention can realize highly reliable transmission in the scheme of hierarchical transmission.

According to this second exemplary embodiment, what is shown in Fig. 7 is an example, in which variable amplifier 700 is placed after multi-carrier modulation circuit 101, variable attenuator 701 after variable amplifier 700, and frequency processor 702 after variable attenuator 701. However, arrangement of variable amplifier 700, variable attenuator 701 and frequency processor 702 is not restricted by this exemplary embodiment, and they can be arranged in any other order to compose the multi-carrier signal transmitter.

### THIRD EXEMPLARY EMBODIMENT

Description is provided for a multi-carrier signal receiver according to the third exemplary embodiment of this invention with reference to Fig. 9.

As shown in Fig. 9, multi-carrier signal receiver 900 of the third exemplary embodiment includes frequency inverter 910, power inverse converter 920, multi-carrier demodulation circuit 930 and carrier modulation circuit 940. This multi-carrier signal receiver 900 carries out processes in reverse of those executed by any of multi-carrier signal transmitter 110 shown in Fig. 1 and multi-carrier signal transmitter 710 shown in Fig. 7.

Frequency inverter 910 inverts a frequency of received signals when needed. That is, frequency inverter 910 has a function of inverting a center frequency of the received multi-carrier signals if the center frequency is found converted at the time of transmission to recover the original center frequency. In the case of receiving lower layer component 304HF or lower layer component 304LF of the multi-carrier signals shown in Fig. 3B, for instance, frequency inverter 910 can invert lower layer component 304HF or lower layer component 304LF of the multi-carrier signals to recover lower layer component 301 shown in Fig. 3A. There are methods available for determining whether the center frequency of the received multi-carrier signals is converted at the time of transmission, such as the one that bases on a frequency conversion data of the center frequency generated and multiplexed with the transmitted signals.

Power inverse converter 920 inverts a power of the multi-carrier signals output from frequency inverter 910 when necessary. In other words, power inverse converter 920 has a function of inverting a power of the received multi-carrier signals if the power is found converted at the time of transmission to recover the original power. In the case of receiving lower layer component 204HF or lower layer component 204LF of the multi-carrier signals shown in Fig. 2B, for instance, power inverse converter 920 can invert lower layer component 204HF or lower layer component 204LF of the multi-carrier signals to recover lower layer component 201 in Fig. 2A. There are methods available for determining whether the power of the received multi-carrier signals is converted at the time of transmission, such as the one that bases on a power conversion data generated and multiplexed with the transmitted signals. Or, if the method used for modulating the multi-carrier signal at the time of transmission is to allocate power levels in a sequentially order, there is also a method of determining conversion of the power by detecting a difference from the scheme of sequential allocation.

Multi-carrier demodulation circuit 930 performs a reversed process of that executed by multi-carrier modulation circuit 101 shown in Fig. 1 or Fig. 7. That is, multi-carrier demodulation circuit 930 demodulates the plurality of multi-carrier signals output from power inverse converter 920 into a plurality of carriers.

Carrier demodulation circuit 940 performs a reversed process of that executed by carrier modulation circuit 100 shown in Fig. 1 or Fig. 7. In other words, carrier modulation circuit 940 demodulates the plurality of carriers output from multi-carrier demodulation circuit 930 to reproduce the input signals fed to carrier modulation circuit 100 shown in Fig. 1 or Fig. 7, and outputs them.

Multi-carrier signal receiver 900 of the third exemplary embodiment carries out the processes in reverse of those executed by any of multi-carrier signal transmitter 110 shown in Fig. 1 and multi-carrier signal transmitter 710 shown in Fig. 7, to reproduce the original input signals fed to carrier modulation circuit 100 shown in Fig. 1 or Fig. 7 out of the received signals, and outputs them in the manner as described above.

In the multi-carrier signal receiver of the third exemplary embodiment, frequency inverter 910 and power inverse converter 920 may be arranged in any order without limited to the one shown in Fig. 9. That is, frequency inverter 910 and power inverse converter 920 may be arranged in the reversed order of Fig. 9.

### FOURTH EXEMPLARY EMBODIMENT

Description is provided for a multi-carrier signal receiver according to the fourth exemplary embodiment of this invention with reference to Fig. 10.

Multi-carrier signal receiver 1000 of the fourth exemplary embodiment shown in Fig. 10 is provided with inversion determination circuit 950 in addition to the multi-carrier signal receiver of the third exemplary embodiment shown in Fig. 9. Description given herein is focused on inversion determination circuit 950 since the structure other than inversion determination circuit 950 is similar to that of Fig. 9.

Inversion determination circuit 950 controls inverting operation of one or both of frequency inverter 910 and power inverse converter 920.

When inversion determination circuit 950 controls frequency inverter 910, it operates according to a conversion data of the center frequency, for instance, that is generated and multiplexed with the transmitted signals at the time of transmission.

When inversion determination circuit 950 controls power inverse converter 920, it operates according to a conversion data of the power, for instance, that is generated and multiplexed with the transmitted signals at the time of transmission.

There is also another method of controlling power inverse converter 920, in which inversion determination circuit 950 detects a mean power of the multi-carrier signals and operates based on a difference with the mean power to control power inverse converter 920. This method uses the mean power when power converter 102 shown in Fig. 1 (or variable amplifier 700 and variable attenuator 701 shown in Fig. 7) is so operated as to convert the power in a manner to maintain a predetermined value after the conversion for a predetermined period. In other words, inversion determination circuit 950 computes the mean power of the multi-carrier signals output from frequency inverter 910 for the predetermined period. Inversion determination circuit 950 then compares the multi-carrier signals output from frequency inverter 910 with the computed mean power. Inversion determination circuit 950 determines that power inversion is necessary if a result of the comparison is found outside of a predetermined range, and it controls power inverse converter 920 accordingly.

### INDUSTRIAL APPLICABILITY

The multi-carrier signal transmitter and the method of transmitting multi-carrier signals according to the present invention feature the interference protection determination circuit, which determines a difference in power levels between the higher layer component and the lower layer component of the multi-carrier signals in a way to prevent digital interference, thereby avoiding the digital interference between the higher layer component and the lower layer component of the multi-carrier signals. The multi-carrier signal receiver and the method of receiving multi-carrier signal according to the present invention have an advantage of achieving high performance and high quality reception by avoiding the digital interference between the higher layer component and the lower layer component of the multi-carrier signals. The multi-carrier signal receiver, the method of transmitting multi-carrier signals and the method of receiving multi-carrier signals of the present invention are therefore useful as the OFDM transmission technique capable of attaining steady reception even in weak-signal locations for the terrestrial digital broadcasting as one field of the multi-carrier transmission technology.

## Claims

1. A multi-carrier signal transmitter comprising:
at least one of a power converter and a frequency converter,
the power converter for receiving a higher layer component and a lower layer component of multi-carrier signals and outputting at least one of the higher layer component and the lower layer component of the multi-carrier signals after converting a power level of one of the higher layer component and the lower layer component, the frequency converter for receiving the higher layer component and the lower layer component of the multi-carrier signals and outputting at least one of the higher layer component and the lower layer component of the multi-carrier signals after converting a center frequency of one of the higher layer component and the lower layer component; and
an interference protection determination circuit for detecting at least one of a difference in power levels between the higher layer component and the lower layer component of the multi-carrier signals output from the power converter and a difference in power levels between the higher layer component and the lower layer component of the multi-carrier signals output from the frequency converter, wherein
the interference protection determination circuit inputs a data of a predetermined threshold to at least one of the power converter and the frequency converter when the difference in power levels is smaller than the predetermined threshold,
the power converter controls a power level of one of the higher layer component and the lower layer component of the multi-carrier signals being output in a manner to make the difference in power levels between the higher layer component and the lower layer component becomes equal to or larger than the predetermined threshold, and
the frequency converter either increases or decreases a center frequency of one of the higher layer component and the lower layer component of the multi-carrier signals being output.

2. The multi-carrier signal transmitter of claim 1, wherein the power converter includes:
a variable amplifier for amplifying an amplitude level of at least one of the higher layer component and the lower layer component of the multi-carrier signals input therein; and
a variable attenuator for attenuating an amplitude level of at least one of the higher layer component and the lower layer component of the multi-carrier signals input therein.

3. The multi-carrier signal transmitter of claim 1, wherein the frequency converter includes a frequency processor having:
a frequency shifter for shifting frequencies of the higher layer component and the lower layer component of the multi-carrier signals into a plurality of center frequency bands for distribution;
a variable band-pass filter for passing only a center frequency band of the predetermined individual multi-carrier signals distributed by the frequency shifter; and
a multiplexer for multiplexing outputs of the variable band-pass filter.

4. A multi-carrier signal receiver comprising:
a frequency inverter for outputting multi-carrier signals after inversely converting a frequency of received signals when necessary;
a power inverse converter for inversely converting a power of the multi-carrier signals when necessary;
a multi-carrier modulation circuit for reproducing a carrier from the multi-carrier signals output from the power inverse converter; and
a carrier modulation circuit for demodulating the carrier.

5. The multi-carrier signal receiver of claim 4 further comprising:
an inversion determination circuit for controlling inverting operation of at least one of the frequency inverter and the power inverse converter.

6. A method of transmitting multi-carrier signal comprising:
at least one of a step of outputting at least one of a higher layer component and a lower layer component of multi-carrier signals after converting a power level of at least one of the higher layer component and the lower layer component, and a step of outputting at least one of the higher layer component and the lower layer component of the multi-carrier signals after converting a center frequency of at least one of the higher layer component and the lower layer component;
a step of detecting at least one of a difference in power levels between the power-converted higher layer component and the lower layer component of the multi-carrier signals and a difference in power levels between the frequency-converted higher layer component and the lower layer component of the multi-carrier signals; and
a step of controlling at least one of the power level and the frequency of at least one of the higher layer component and the lower layer component of the multi-carrier signals in a manner to make the difference in power levels between the higher layer component and the lower layer component becomes equal to or larger than a predetermined threshold when the detected difference is smaller than the predetermined threshold.

7. A method of receiving multi-carrier signal comprising:
a step of outputting multi-carrier signals after inversely converting a frequency of received signals when necessary;
a step of inversely converting a power of the multi-carrier signals when necessary;
a step of reproducing a carrier from the multi-carrier signals output after the power inversion; and
a step of demodulating the carrier.
